# EUROPÄISCHE PATENTANMELDUNG

(11) **EP 4 219 897 A1**
(43) Veröffentlichungstag der Anmeldung: **02.08.2023**
(21) Anmeldenummer: 22213756.4
(22) Anmeldetag: 15.12.2022
(51) Int. Cl.: F01D 5/02, F01D 25/24

(54) **ROTOR MIT EINEM WUCHTFLANSCH, ROTORANORDNUNG MIT ZUMINDEST EINEM ROTOR UND STRÖMUNGSMASCHINE MIT ZUMINDEST EINEM ROTOR ODER MIT EINER ROTORANORDNUNG**

(30) Priorität: 26.01.2022 DE 102022101762
(71) Anmelder: MTU Aero Engines AG, 80995 München (DE)
(72) Erfinder: Albers, Lothar, 80995 München (DE)

(57) **Zusammenfassung**

Die Erfindung betrifft einen Rotor (100) zur Integration in eine Strömungsmaschine, mit einem Rotorgrundkörper (101), wobei an dem Rotorgrundkörper (101) in einem Rotoraußenraum (RA) des Rotors (100) zumindest ein Schaufelelement (102) aufgenommen ist, wobei sich der Rotorgrundkörper (101) in einer Radialrichtung (R) des Rotors (100) erstreckt und einen Verbindungsabschnitt (103) umfasst, welcher sich zur Verbindung mit zumindest einem weiteren Rotor (200, 300) in einer Axialrichtung (A) des Rotors (100) erstreckt und den Rotoraußenraum (RA) von einem Rotorinnenraum (RI) des Rotors (100) trennt, wobei der Verbindungsabschnitt (103) in Axialrichtung (A) an einer Stirnseite (104), vorzugsweise in Axialrichtung (A) an einer stromabwärts liegenden Stirnseite (104), einen Wuchtflansch (105) umfasst, wobei der Wuchtflansch (105) zur Kompensation einer Unwucht des Rotors (100) konfiguriert ist und sich zumindest abschnittsweise in Radialrichtung (R) in den Rotoraußenraum (RA) erstreckt. Die Erfindung betrifft ferner eine Rotoranordnung mit zumindest einem Rotor (100) sowie eine Strömungsmaschine mit zumindest einem Rotor (100) oder mit einer Rotoranordnung.

## Beschreibung

Die vorliegende Erfindung liegt auf dem Gebiet der Strömungsmaschinen und betrifft einen Rotor mit einem Wuchtflansch zum Ausgleich oder zur Kompensation einer Unwucht oder von Unwuchten. Die vorliegende Erfindung betrifft ferner eine Rotoranordnung mit einer Welle und mehreren Rotoren, sowie eine Strömungsmaschine mit einer Rotoranordnung oder mit zumindest einem Rotor.

Im Bereich der Strömungsmaschinen, beispielsweise bei einer Gasturbine oder bei einem Verdichter, kommen Rotoren als Laufräder mit einer Vielzahl an Schaufelelementen zum Einsatz, um ein Medium in Bewegung zu versetzen. Das Medium kann als Arbeitsmedium beispielsweise ein Luftstrom oder ein Abgasstrom oder ein Gemisch aus einem Luftstrom und einem Abgasstrom sein. Aufgrund von instationären mechanischen und thermischen Betriebsbedingungen und somit dynamischen Belastungen müssen Rotoren unterschiedlichste Anforderungen erfüllen und dennoch entsprechende Funktionalität gewährleisten. Dies ist beispielsweise vor allem bei einer mobilen Gasturbine in Form einer Fluggasturbine der Fall.

Um beispielsweise Lagerbelastungen und Verschleiß zu reduzieren und vorzugsweise Laufruhe und Lebensdauer zu erhöhen, muss an den Rotoren eine vorhandene Unwucht ausgeglichen werden. Bei Unwuchten eines Rotors wird zwischen statischen, dynamischen und aerodynamischen Unwuchten unterschieden. Statische und dynamische Unwuchten entstehen beispielsweise durch ungleichmäßige Massenverteilungen in einzelnen Schaufelelementen eines Rotors infolge von fertigungsbedingten Toleranzen.

Im Fall von insbesondere hohen Drehzahlen des Rotors in Abhängigkeit seines jeweiligen Einsatzgebietes ist vor allem eine statische und dynamische Auswuchtung des Rotors, das heißt ein Auswuchten des Rotors für einen laufenden Betriebszustand bzw. Betriebsbereich geboten oder erforderlich, um das Unwuchtmoment zu neutralisieren und den Rotor anschließend verschleißarm sowie wartungsarm betreiben zu können.

Ferner muss vorzugsweise bei Rotoren für Fluggasturbinen mit entsprechenden Verdichtern und den damit einhergehenden Rotoranordnungen dafür Sorge getragen werden, dass vor allem ein Abfluss von Medien zur Schmierung, beispielsweise Öl, aus dem Innenraum des Rotors und insgesamt aus dem Innenraum der Rotoranordnung stattfinden kann, damit beispielsweise eine Verunreinigung einer Flugzeugkabine vermieden wird. Dies bedingt allerdings eine entsprechende geometrische Ausbildung des Rotorinnenraums beispielsweise derart, dass keine Hohlräume, Hinterschneidungen oder sonstige Bereiche vorhanden sein dürfen, in denen sich das Medium zur Schmierung ansammeln kann.

Bei bekannten Rotoren sind Wuchtvorrichtungen oder Wuchtelemente vorhanden, welche sich aufgrund einer vorgegebenen geometrischen Ausbildung zwangsläufig an entsprechenden Stellen befinden.

Aus der europäischen Patentschrift Nr. EP 3 192 966 B1 ist eine Rotoranordnung für eine axiale Strömungsmaschine mit einem axial ausgerichteten Wuchtflansch sowie ein entsprechend ausgestatteter Verdichter einer Strömungsmaschine bekannt. Ein erster Rotorgrundkörper weist einen in axialer Richtung erstreckenden Verbindungsflansch auf, welcher zur formschlüssigen und kraftschlüssigen Verbindung mit einem zweiten, benachbarten Rotorgrundkörper über dessen Rotorarm mit Verbindungsflansch dient. Das Wuchten des ersten Rotorgrundkörpers erfolgt mittels des Wuchtflanschs, welcher von dem Verbindungsflansch des ersten Rotorgrundkörpers radial innenseitig ausgebildet ist und sich in axialer Richtung erstreckt. Der Wuchtflansch verfügt in Axialrichtung über einen Endbereich zur Materialentnahme.

In der europäischen Patentschrift Nr. EP 3 404 207 B1 wird eine Rotoranordnung mit einem Rotor und einem Wuchtelement für ein Triebwerk sowie ein Verfahren zur Montage des Wuchtelements beschrieben. Der Rotor umfasst eine Rotorscheibe, welche sich in Umfangsrichtung erstreckt und über einen Befestigungsabschnitt verfügt, welche außerhalb des Rotorinnenraums angeordnet ist. An dem Befestigungsabschnitt der Rotorscheibe ist ein mehrteiliges hakenförmiges Wuchtelement angeordnet, welches über einen radialen äußeren Schenkelabschnitt und über einen radialen inneren Schenkelabschnitt verfügt und mittelseines Fixierelements in Form einer Schraube an dem Befestigungsabschnitt befestigbar ist. Die Schraube ist verstellbar gelagert, um einen radialen Abstand der beiden Schenkelabschnitte des Wuchtelements zu verändern.

Die europäische Patentschrift Nr. EP 3 091177 B1 betrifft einen Rotor für eine Strömungsmaschine sowie einen Verdichter. Der Rotor verfügt über einen ersten und einen Rotorgrundkörper. Der zweite Rotorgrundkörper ist über einen Rotorarm zum formschlüssigen Anflanschen an den ersten Rotorgrundkörper ausgebildet. Auf der radial äußeren Seite des Rotorarms ist am Endbereich ein Wuchtring angeordnet, welcher mit dem Rotorarm integral verbunden ist.

In der europäischen Patentanmeldung Nr. EP 3 091 178 A1 wird eine Rotortrommel für eine Strömungsmaschine beschrieben, welche über zwei benachbarte Rotorgrundkörper verfügt. Der zweite Rotorgrundkörper ist mit einem Rotorarm ausgestattet, welcher über eine Durchtrittsöffnung zum Durchströmen von Fluiden aus dem Rotorinnenraum verfügt. Ferner ist auf der radial äußeren Seite des Rotorarms am Endbereich ein Wuchtring angeordnet, welcher mit dem Rotorarm integral verbunden ist.

Die europäische Patentschrift Nr. EP 3 091 179 B1 betrifft eine Rotoranordnung für eine Strömungsmaschine sowie einen Verdichter. Die Rotoranordnung verfügt über einen ersten Rotor mit einer ersten Rotorstufe, das heißt einem ersten Rotorgrundkörper, und über eine Welle mit einer ersten Nabe zur Verbindung der ersten Rotorstufe mit der Welle. Die Nabe ist mit einer Wuchtvorrichtung mit einem Wuchtgewicht zum Auswuchten der ersten Rotorstufe ausgestattet, wobei über den Umfang der Nabe mehrere Wuchtgewichte angeordnet sein können. Das Wuchtgewicht ist auf einem Wuchtflansch angeschraubt. Die erste Rotorstufe weist selbst keine Wuchtvorrichtung auf. Auf der stromab zugewandten Seite der zweiten Rotorstufe ist ein Wuchtbund auf der nach außen gerichteten Seite des Rotorarms des zweiten Rotorgrundkörpers angeordnet.

Zum weiteren Stand der Technik wird auf die US-Patente Nr. US 5,537,814 Nr. US 5,473,883 verwiesen.

Die bekannten Rotoren und Rotoranordnungen sind hinsichtlich ihrer Konzepte zur Kompensation oder zum Ausgleich einer Unwucht oder von Unwuchten relativ aufwendig und/oder aus mehreren Komponenten bestehend und damit beispielsweise relativteuer. Zudem weisen bekannte Rotoren durch entsprechende Wuchtvorrichtungen oder Wuchtelemente strukturmechanische Beeinträchtigungen oder Nachteile auf, welche es zu reduzieren oder vorzugsweise zu vermeiden gilt.

Es ist eine Aufgabe der vorliegenden Erfindung, einen verbesserten Rotor bereitzustellen, welcher vor allem konfiguriert ist, auf relativ einfache Art und Weise eine Unwucht ausgleichen oder kompensieren zu können und welcher zudem durch verbesserte strukturmechanische Eigenschaften gekennzeichnet ist. Ferner ist es eine Aufgabe der vorliegenden Erfindung, eine Rotoranordnung mit mehreren Rotoren gemäß der vorliegenden Erfindung, sowie eine Strömungsmaschine mit einer solchen Rotoranordnung oder mit zumindest einem Rotor bereitzustellen.

Die Aufgabe wird durch die Merkmale der Ansprüche 1, 11 und 12 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt einen Rotor zur Integration in eine Strömungsmaschine, vorzugsweise in eine axiale und/oder mobile Strömungsmaschine, mit einem Rotorgrundkörper, wobei an dem Rotorgrundkörper in einem Rotoraußenraum des Rotors zumindest ein Schaufelelement aufgenommen ist, wobei sich der Rotorgrundkörper im Wesentlichen in einer Radialrichtung des Rotors erstreckt und einen Verbindungsabschnitt umfasst, welcher sich zur Verbindung mit zumindest einem weiteren Rotor in einer Axialrichtung des Rotors erstreckt und den Rotoraußenraum von einem Rotorinnenraum des Rotors trennt, wobei der Verbindungsabschnitt in Axialrichtung an einer Stirnseite, vorzugsweise in Axialrichtung an einer stromabwärts liegenden Stirnseite, einen Wuchtflansch umfasst, wobei der Wuchtflansch zur Kompensation einer Unwucht des Rotors ausgebildet und/oder konfiguriert ist und sich zumindest abschnittsweise im Wesentlichen in Radialrichtung in den Rotoraußenraum erstreckt.

Der Rotor gemäß der vorliegenden Erfindung ist vorzugsweise zur Integration in eine Fluggasturbine und/oder in einem Verdichter ausgebildet. Durch den Rotor, welcher auch als Laufrad oder als Schaufelrad bezeichnet werden kann, kann eine einfache Kompensation einer Unwucht oder von Unwuchten über den Wuchtflansch gewährleistet werden, nachdem der Wuchtflansch hinsichtlich seiner Lage radial nach außen ausgerichtet und/oder erstreckend ist. Der Verbindungsabschnitt kann als Rotorarm des Rotors in Form eines Vorsprungs auf einer ersten Stirnseite und auf einer zweiten Stirnseite in Axialrichtung ausgebildet sein.

Der Verbindungsabschnitt kann sich bevorzugt sowohl in eine stromaufwärtige, als auch in eine stromabwärtige Axialrichtung vom Rotorgrundkörper weg erstrecken und dazu eingerichtet sein, den Rotor mit zwei weiteren Rotoren zu verbinden. Dabei kann der Verbindungsabschnitt in sowohl in stromaufwärtige, als auch in stromabwärtige Richtung bevorzugt jeweils nicht mehr 30%, insbesondere nicht mehr als 20%, vom Rotorradius vorspringen. Weiter bevorzugt kann der Verbindungsabschnitt an seinen radial äußeren Oberflächen frei von Dichtfins sein. Weiter bevorzugt kann der Verbindungsabschnitt dazu ausgebildet sein, von Rotorarmen der zwei weiteren Rotoren untergriffen zu werden. Hierzu hat der Verbindungsabschnitt sowohl stromaufwärts als auch stromabwärts eine gerade, sich im Wesentlichen parallel zur Axialrichtung erstreckende Unterkante (d.h. eine sich in Axialrichtung erstreckende radiale Innenseite).

Die Axialrichtung kann vorzugsweise eine Längsrichtung des Rotors und insbesondere eine Längsrichtung entlang einer Welle einer Anordnung mehrerer Rotoren hintereinander kennzeichnen. Die Radialrichtung kann von einer Rotationsachse des Rotors ausgehend vorzugsweise senkrecht zu dieser Rotationsachse liegen.

Gemäß einem weiteren Aspekt der vorliegenden Erfindung kann vorgesehen sein, dass zwischen dem Wuchtflansch und dem Rotorgrundkörper eine Kavität oder ein Hohlraum ausgebildet ist, wobei die Kavität oder der Hohlraum in einer Ansicht, vorzugsweise in einer Schnittansicht, zumindest abschnittsweise eine im Wesentlichen bogenförmige Kontur oder eine im Wesentlichen kreisförmige Kontur aufweist, und/oder wobei die Kavität oder der Hohlraum in einer Umfangrichtung des Rotors im Wesentlichen rinnenförmig oder im Wesentlichen rillenförmig ausgebildet ist, und/oder wobei die Kavität oder der Hohlraum in Radialrichtung hinterschneidungsfrei ausgebildet ist.

Dadurch kann beispielsweise gewährleistet werden, dass mit einem entsprechenden Bearbeitungswerkzeug der Bereich des Verbindungsabschnitts zwischen dem Wuchtflansch und den weiteren Abschnitten des Rotorgrundkörpers entsprechend bearbeitet werden kann, beispielsweise mittels eines Drehwerkzeugs, eines Fräswerkzeugs oder mittels eines Kugelstrahlwerkzeugs. Ferner können durch eine Ausbildung der Kavität oder eines Hohlraums wie hierin offenbart die strukturmechanischen Eigenschaften verbessert werden, zumindest an gewissen Stellen des Rotors.

Es ist möglich, dass der Wuchtflansch einen Bearbeitungsabschnitt umfasst, welcher sich in einer Umfangsrichtung des Rotors erstreckt und zur Materialentnahme, vorzugsweise zur spanenden Materialabtragung, ausgebildet ist, wobei vorzugsweise der Bearbeitungsabschnitt im Wesentlichen ringförmig ausgebildet, und/oder auf den Wuchtflansch aufgepresst, aufgeschrumpft oder geschweißt, oder mit dem Wuchtflansch integral einstückig hergestellt ist. Somit können vorzugsweise die rotordynamischen Eigenschaften des Rotors durch Beseitigung entsprechender Unwuchten über den Wuchtflansch verbessert werden. Beispielsweise wird die Laufruhe des Rotors erhöht und Lagerbelastungen verringert.

Gemäß einem weiteren Gesichtspunkt der vorliegenden Erfindung kann vorgesehen sein, dass der Verbindungsabschnitt einen Kontaktflansch aufweist, welcher zur Kontaktierung eines weiteren Rotors ausgebildet ist, um den Rotor mit dem weiteren Rotor im Wesentlichen formschlüssig und/oder im Wesentlichen kraftschlüssig zu verbinden, wobei der Wuchtflansch zu dem Kontaktflansch beabstandet angeordnet und/oder ausgebildet ist, vorzugsweise in Radialrichtung beabstandet angeordnet und/oder ausgebildet ist, und/oder wobei der Wuchtflansch zu dem Kontaktflansch, vorzugsweise zu einer Stirnfläche des Kontaktflanschs, in der Axialrichtung zumindest abschnittsweise versetzt angeordnet und/oder ausgebildet ist. Mit anderen Worten kann sich in Axialrichtung der Wuchtflansch über den Kontaktflansch hinaus erstrecken. Der Kontaktflansch kann entsprechend ausgebildete und ausgerichtete Stirnflächen als kontaktierende Passsitzflächen aufweisen.

Es ist möglich, dass an der Stirnseite der Wuchtflansch und der Kontaktflansch über einen Absatz miteinander verbunden sind oder einander übergehen, wobei der Absatz in einer Ansicht, vorzugsweise in einer Schnittansicht, zumindest abschnittsweise eine im Wesentlichen bogenförmige Kontur aufweist.

Dadurch ist beispielsweise eine weiter vereinfachte Herstellung und/oder Bearbeitung des Rotors gewährleistet.

Gemäß einem weiteren Aspekt der vorliegenden Erfindung kann vorgesehen sein, dass in Radialrichtung der Kontaktflansch zu dem Wuchtflansch zumindest abschnittsweise gegenüberliegend angeordnet ist.

Es ist möglich, dass der Rotorgrundkörper einen ersten im Wesentlichen scheibenförmigen Tragabschnitt und einen zweiten im Wesentlichen scheibenförmigen Tragabschnitt aufweist, wobei der Verbindungsabschnitt in Radialrichtung zwischen dem ersten Tragabschnitt und dem zweiten Tragabschnitt angeordnet ist und/oder einstückig integral mit dem ersten Tragabschnitt und dem zweiten Tragabschnitt hergestellt ist.

Gemäß einem weiteren Gesichtspunkt der vorliegenden Erfindung kann vorgesehen sein, dass der Wuchtflansch in Axialrichtung eine im Wesentlichen zylinderförmige Stirnfläche aufweist und in Axialrichtung eine im Wesentlichen ebene Stirnfläche aufweist, wobei die im Wesentlichen zylinderförmige Stirnfläche zur im Wesentlichen ebenen Stirnfläche im Wesentlichen senkrecht angeordnet und/oder ausgerichtet ist. Mit anderen Worten kann der Wuchtflansch in einer Ansicht, vorzugsweis in einer Schnittansicht, eine im Wesentlichen quadratische Kontur oder eine im Wesentlichen rechteckförmige Kontur bei Außerachtlassung der Anbindung an den Verbindungsabschnitt aufweisen.

Gemäß einem weiteren Aspekt der vorliegenden Erfindung kann vorgesehen sein, dass der Verbindungsabschnitt einen Markierungsflansch umfasst, welcher in Axialrichtung auf der dem Wuchtflansch gegenüberliegenden Stirnseite des Rotors angeordnet ist, wobei der Markierungsflansch in einer Ansicht, vorzugsweise in einer Schnittansicht, zumindest abschnittsweise eine im Wesentlichen trapezförmige Kontur aufweist.

Es ist möglich, dass der Wuchtflansch und zumindest der Verbindungabschnitt zumindest abschnittsweise integral einstückig und/oder stoffschlüssig hergestellt sind, vorzugsweise durch zumindest einen Gießvorgang und/oder durch zumindest einen Spritzvorgang und/oder durch zumindest einen Schweißvorgang und/oder durch zumindest einen Dreh- oder Fräsvorgang.

Die vorliegende Erfindung betrifft nach einem zweiten allgemeinen Gesichtspunkt eine Rotoranordnung mit einer Welle und zumindest einem Rotor wie hierin offenbart, wobei der zumindest eine Rotor auf der Welle lösbar befestigt ist und wobei in Axialrichtung zumindest zwei weitere Rotoren mit dem zumindest einen Rotor über den Verbindungsabschnitt im Wesentlichen formschlüssig und/oder im Wesentlichen kraftschlüssig verbunden sind.

Die vorliegende Erfindung betrifft nach einem dritten allgemeinen Gesichtspunkt eine Strömungsmaschine mit zumindest einem Rotor wie hierin offenbart oder mit einer Rotoranordnung wie hierin offenbart, wobei die Strömungsmaschine als Fluggasturbine oder als Verdichter ausgebildet ist.

Ein erfindungsgemäßer Verdichter kann beispielsweise ein Hochdruckverdichter einer Fluggasturbine sein.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: einen Ausschnitt eines ersten Ausführungsbeispiels des Rotors gemäß der vorliegenden Erfindung in einer Schnittansicht;
- Fig. 2: einen Ausschnitt eines zweiten Ausführungsbeispiels des Rotors gemäß der vorliegenden Erfindung in einer Schnittansicht;
- Fig. 3: einen weiteren Ausschnitt des zweiten Ausführungsbeispiels des Rotors aus Figur 2 in einer Schnittansicht.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

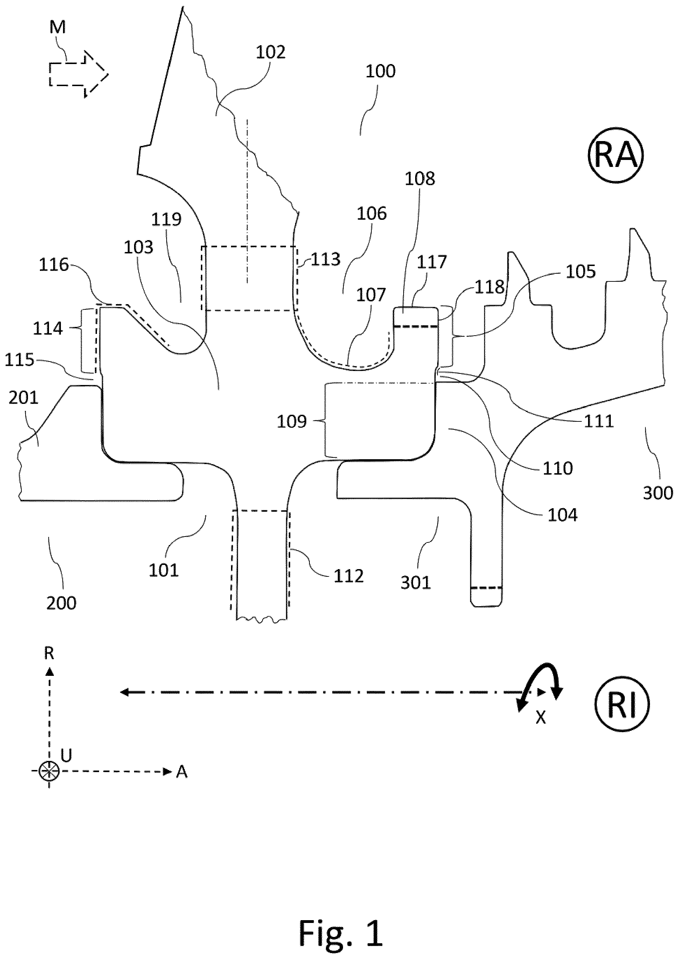

Figur 1 zeigt einen Ausschnitt eines ersten Ausführungsbeispiels des Rotors 100 gemäß der vorliegenden Erfindung in einer Schnittansicht.

Der Rotor 100 ist für eine Strömungsmaschine, vorzugsweise eine mobile und/oder axiale Strömungsmaschine, ausgebildet und/oder konfiguriert. Die Strömungsmaschine ist in den Figuren aus Gründen der Übersichtlichkeit nicht dargestellt. Die Strömungsmaschine kann eine Gasturbine, vorzugsweise eine mobile Gasturbine, wie beispielsweise eine Fluggasturbine, oder ein Verdichter, beispielsweise ein Hochdruckverdichter oder ein Niederdruckverdichter, sein. Der Verdichter kann beispielsweise Bestandteil der mobilen Gasturbine in Form einer Fluggasturbine sein. Der Rotor 100 wird somit von einem Arbeitsmedium M im Wesentlichen in der Axialrichtung A durchströmt, was in Figur 1 durch den gestrichelten Pfeil gekennzeichnet ist. Das Arbeitsmedium M kann vorzugsweise Luft sein.

Der Rotor 100 ist zur Befestigung, vorzugsweise lösbaren Befestigung, auf einer Welle ausgebildet und/oder konfiguriert, um eine Drehbewegung um die Rotationsachse X ausführen zu können, wobei die Rotationsachse X parallel zu der Axialrichtung A des Rotors 100 ist. Die Welle ist in den Figuren aus Gründen der Übersichtlichkeit ebenfalls nicht dargestellt.

Der Rotor 100 kann vorzugsweise Bestandteil einer Rotoranordnung, vorzugsweise einer mehrstufigen Rotoranordnung, sein. Die Rotoranordnung umfasst somit mehrere Rotoren 100, 200 und 300, welche zur Verdichtung des Arbeitsmediums M beitragen. In Figur 1 sind zu dem Rotor 100 zwei in Axialrichtung A benachbart angeordnete Rotoren 200 und 300 teilweise dargestellt. Von dem Rotor 200 ist teilweise der Verbindungsabschnitt 201 als Rotorarm dargestellt und von dem Rotor 300 ist teilweise der Verbindungsabschnitt 301 als Rotorarm dargestellt. Die Verbindung der Rotoren 100, 200 und 300 miteinander erfolgt im Wesentlichen formschlüssig und vorzugsweise zusätzlich im Wesentlichen kraftschlüssig.

Der Rotor 100 oder einzelne Komponenten und Elemente des Rotors 100 können vorzugsweise aus einem metallischen Werkstoff oder aus einer Kombination metallischer Werkstoffe hergestellt sein. Der Rotor 100 oder einzelne Komponenten und Elemente des Rotors 100 können durch zumindest einen Gießvorgang und/oder durch zumindest einen Spritzvorgang, vorzugsweise durch zumindest einen Metallpulverspritzgussvorgang, hergestellt sein. Es ist auch möglich, dass der Rotor 100 oder einzelne Komponenten und Elemente des Rotors 100 durch zumindest einen Sintervorgang und/oder durch zumindest einen 3D-Druckvorgang hergestellt ist. Vorzugsweise kann der Rotor 100 integral einstückig ausgebildet sein. Es ist zusätzlich oder alternativ möglich, dass der Rotor 100 durch Zerspanen aus dem Vollen, und/oder durch zumindest einen Schweißvorgang hergestellt und/oder bearbeitet ist.

Der Rotor 100 umfasst einen Rotorgrundkörper 101, welcher als Tragstruktur oder Basisstruktur des Rotors 100 zur Aufnahme zumindest eines Schaufelelements 102, vorzugsweise einer geraden Vielzahl an Schaufelelementen 102, ausgebildet ist. Das Schaufelelement 102 kann beispielsweise als ein aus dem Stand der Technik bekanntes Schaufelelement ausgebildet sein. Das zumindest eine Schaufelelement 102 wird von dem Rotorgrundkörper 101 im so genannten Rotoraußenraum RA aufgenommen. Die Aufnahme des zumindest einen Schaufelelements 109 in Form einer Befestigung kann durch bekannte Konzepte oder Mechanismen erfolgen.

Der Rotorgrundkörper 101 erstreckt sich im Wesentlichen in einer Radialrichtung R des Rotors 100 und umfasst einen Verbindungsabschnitt 103. Der Verbindungsabschnitt 103 ist als so genannter Rotorarm zur Verbindung mit zumindest einem weiteren Rotor 200, 300 in der Axialrichtung A ausgebildet. Mit anderen Worten erstreckt sich der Verbindungsabschnitt 103 in der Axialrichtung A des Rotors 100 und trennt somit den Rotoraußenraum RA von einem Rotorinnenraum RI des Rotors 100. Der Verbindungsabschnitt 103 umfasst in Axialrichtung A an einer Stirnseite 104, vorzugsweise in Axialrichtung A an einer stromabwärts liegenden Stirnseite 104 einen Wuchtflansch 105, welcher auch als Wuchtbund bezeichnet werden kann. Mit anderen Worten ist der Wuchtflansch 105 in Axialrichtung A an einem freien Ende des Verbindungsabschnitts 103 angeordnet.

Erfindungsgemäß ist der Wuchtflansch 105 zur Kompensation oder zum Ausgleich einer Unwucht oder von Unwuchten des Rotors 100 ausgebildet und/oder konfiguriert und erstreckt sich zumindest abschnittsweise in Radialrichtung R in den Rotoraußenraum RA. Der Wuchtflansch 105 erstreckt sich somit von dem Verbindungsabschnitt 103 ausgehend in Radialrichtung R weg, das heißt nach außen und somit radial nach außen.

Der Rotorgrundkörper 101 weist einen ersten im Wesentlichen scheibenförmigen Tragabschnitt 112 und einen zweiten im Wesentlichen scheibenförmigen Tragabschnitt 113 auf. Der Verbindungsabschnitt 103 ist in Radialrichtung R zwischen dem ersten Tragabschnitt 112 und dem zweiten Tragabschnitt 113 angeordnet. Zwischen dem Wuchtflansch 105 und dem Rotorgrundkörper 101, vorzugsweise dem zweiten Tragabschnitt 113, ist eine Kavität 106 oder ein Hohlraum ausgebildet. Wie sich aus der Schnittansicht in Figur 1 ergibt, weist die Kavität 106 zumindest abschnittsweise eine bogenförmige Kontur 107 auf. Mit anderen Worten ist die Kavität 106 in einer Umfangsrichtung U rinnenförmig ausgebildet. Ferner ist die Kavität 106 in Radialrichtung R hinterschneidungsfrei ausgebildet. Dadurch kann beispielsweise eine entsprechende Bearbeitung durch ein Herstellungswerkzeug, beispielsweise durch ein Drehwerkzeug, ein Fräswerkzeug oder durch ein Kugelstrahlwerkzeug, gewährleistet werden. Durch die Ausbildung der Kavität 106 wie hierin offenbart ist der Rotor 100 durch verbesserte strukturmechanische Eigenschaften gekennzeichnet. Beispielsweise können lokale schädliche Spannungsspitzen im Bereich des Wuchtflansches 105 beim Übergang des Verbindungsabschnitts 103 in den zweiten Tragabschnitt 113 vermieden oder zumindest signifikant reduziert werden. Weiterhin können an definierten Stellen Eigenspannungen erzeugt werden, um beispielsweise Dauerfestigkeiten zu erhöhen.

Der Wuchtflansch 105 umfasst einen Bearbeitungsabschnitt 108, welcher sich in der Umfangsrichtung U des Rotors 100 erstreckt und zur Materialentnahme, vorzugsweise zur spanenden Materialabtragung,ausgebildet ist. Der Bearbeitungsabschnitt 108 ist vorzugsweise im Wesentlichen ringförmig ausgebildet und kann auf dem Wuchtflansch 105 aufgepresst und/oder geschweißt, beispielsweise durch einen Reibschweißvorgang, oder mit dem Wuchtflansch integral einstückig und somit auch stoffschlüssig hergestellt sein.

Der radial nach außen gerichtete Wuchtflansch 105 umfasst in Axialrichtung A eine im Wesentlichen zylinderförmige Stirnfläche 117 und in Radialrichtung R eine im Wesentlichen ebene Stirnfläche 118. Die im Wesentlichen zylinderförmige Stirnfläche 117 ist zur im Wesentlichen ebenen Stirnfläche 118 im Wesentlichen senkrecht angeordnet und/oder ausgerichtet.

Der Verbindungsabschnitt 103 weist einen Kontaktflansch 109 auf. Der Kontaktflansch 109 ist zur Kontaktierung des Rotors 300 ausgebildet, um den Rotor 100 mit dem weiteren Rotor 300 im Wesentlichen formschlüssig und/oder im Wesentlichen kraftschlüssig zu verbinden. Die Verbindung erfolgt hierbei über entsprechende Stirnflächen des Kontaktflanschs 109 in Radialrichtung R und Axialrichtung A als Kontaktflächen, welche in den Figuren aus Gründen der Übersichtlichkeit nicht näher gekennzeichnet sind. Der Wuchtflansch 105 ist in Radialrichtung R zu dem Kontaktflansch 109 beabstandet angeordnet und/oder ausgebildet. Ferner ist der Wuchtflansch 105 zu dem Kontaktflansch 109, das heißt zu einer Stirnfläche des Kontaktflanschs 109 in der Axialrichtung A zumindest abschnittsweise versetzt angeordnet und/oder ausgebildet. Der Wuchtflansch 105 ist an der Stirnseite 104 des Rotors 100, das heißt des Verbindungsabschnitts 103 über einen Absatz 110 mit dem Kontaktflansch 109 verbunden. Wie aus der Schnittansicht in Figur 1 hervorgeht, weist der Absatz 110 zumindest abschnittsweise eine im Wesentlichen bogenförmige Kontur 111. Ferner zeigt sich, dass der Kontaktflansch 109 in Radialrichtung R zu dem Wuchtflansch 105 zumindest abschnittsweise gegenüberliegend angeordnet ist. Somit wird der Rotor 300 über seinen Verbindungsabschnitt 301 mit dem Kontaktflansch 109 vom Rotorinnenraum RI kommend verbunden.

Der Verbindungsabschnitt 103 des Rotors 100 kann, wie das Ausführungsbeispiel in Figur 1 zeigt, ferner einen Markierungsflansch 114 umfassen. Der Markierungsflansch 114 ist in Axialrichtung A auf der dem Wuchtflansch 105 gegenüberliegenden Stirnseite 115 angeordnet. Aus der Schnittansicht in Figur 1 ergibt sich, dass der Markierungsflansch 114 zumindest abschnittsweise eine im Wesentlichen trapezförmige Kontur 116 aufweist. Der Markierungsflansch 114 geht unter anderem über die Kavität 119 in den zweiten Tragabschnitt 113 des Rotorgrundkörpers 101 über.

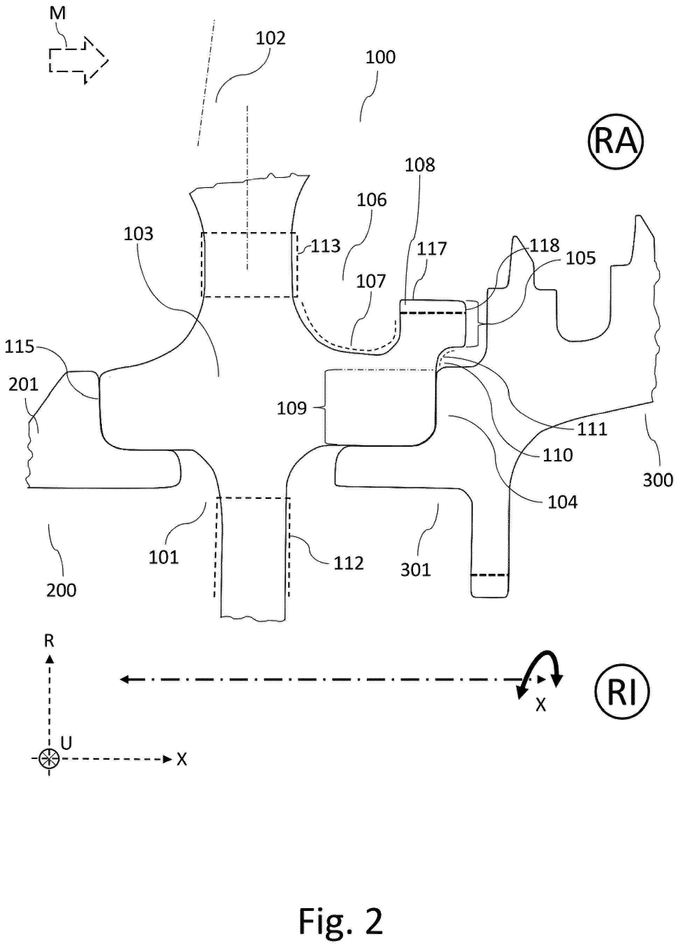

Figur 2 zeigt einen Ausschnitt eines zweiten Ausführungsbeispiels des Rotors 100 gemäß der vorliegenden Erfindung in einer Schnittansicht. Der Rotor 100 in Figur 2 ist zu dem ersten Ausführungsbeispiel des Rotors 100 im Wesentlichen identisch oder zumindest ähnlich ausgebildet und/oder konfiguriert. Allerdings weist der Rotor 100 in Figur 2 keinen Markierungsflansch 114 auf.

Ferner ist der Absatz 110 zwischen dem Wuchtflansch 105 und dem Kontaktflansch 109 bei dem Rotor 110 ausgeprägter, das heißt größer ausgebildet als der Absatz 110 des Rotors 100 gemäß dem ersten Ausführungsbeispiel in Figur 1.

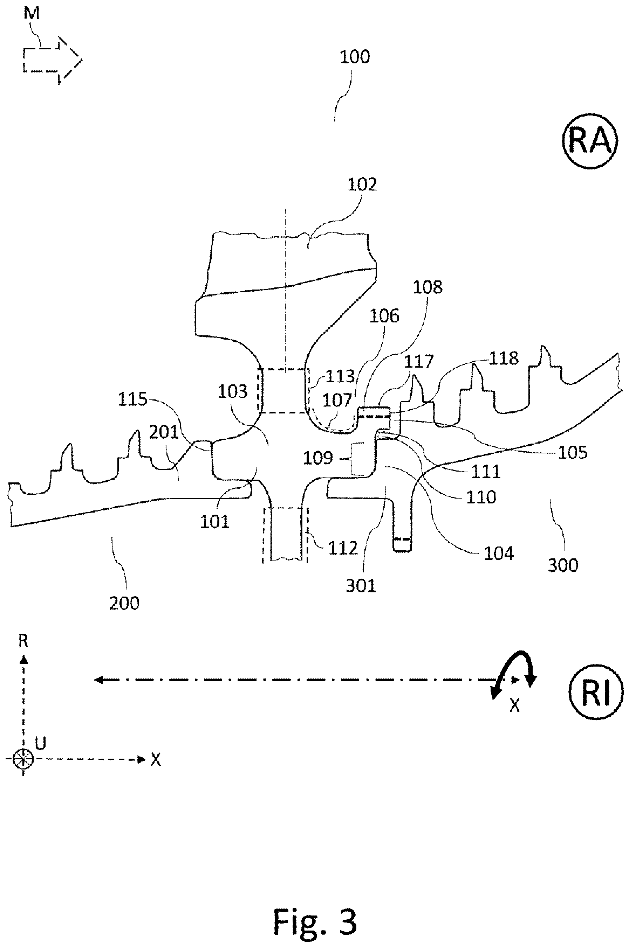

Figur 3 zeigt einen weiteren Ausschnitt des zweiten Ausführungsbeispiels des Rotors aus Figur 2 in einer Schnittansicht, aus welchen gut erkennbar ist, dass die entsprechenden Verbindungsabschnitte 201 und 301 der weiteren Rotoren 200 und 300 mit ihren jeweiligen Stirnflächen als Passsitzflächen den Verbindungsabschnitt 103 im Bereich des Rotorinnenraums RI untergreifen. Mit anderen Worten ist der Rotor 100 mit dem Verbindungabschnitt 103 als Rotorarm und dem entsprechend positionierten und ausgerichteten Wuchtabschnitt 105 derart ausgebildet und/oder konfiguriert, dass der Verbindungsabschnitt 103 des Rotors 100 im Bereich der Verbindung mit den Rotoren 200 und 300 in Radialrichtung R außen liegt und somit den Rotorinnenraum RI von dem Rotoraußentraum RAtrennt.

Mit der vorliegenden Erfindung kann insbesondere ein Rotor 100 bereitgestellt werden, welcher verbesserte strukturmechanische Eigenschaften aufweist und eine einfache Kompensation einer Unwucht oder von Unwuchten über die Lage des Wuchtflanschs 105, das heißt Wuchtbunds ermöglicht. Somit kann im Weiteren vor allem ein verschleißarmer Betrieb und eine längere Lebensdauer des Rotorserzielt werden.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 100: Rotor
- 101: Rotorgrundkörper
- 102: Schaufelelement
- 103: Verbindungsabschnitt
- 104: Stirnseite
- 105: Wuchtflansch/Wuchtbund
- 106: Kavität
- 107: Kontur
- 108: Bearbeitungsabschnitt
- 109: Kontaktflansch
- 110: Absatz
- 111: Kontur
- 112: ersterTragabschnitt
- 113: zweiterTragabschnitt
- 114: Markierungsflansch
- 115: Stirnseite
- 116: Kontur
- 117: Stirnfläche
- 118: Stirnfläche
- 119: Kavität
- 200: Rotor
- 201: Verbindungsabschnitt
- 300: Rotor
- 301: Verbindungsabschnitt
- A: Axialrichtung
- M: Arbeitsmedium
- R: Radialrichtung
- RA: Rotoraußenraum
- RI: Rotorinnenraum
- U: Umfangsrichtung
- X: Rotationsachse

## Patentansprüche

1. Rotor (100) zur Integration in eine Strömungsmaschine, mit einem Rotorgrundkörper (101), wobei an dem Rotorgrundkörper (101) in einem Rotoraußenraum (RA) des Rotors (100) zumindest ein Schaufelelement (102) aufgenommen ist,
wobei sich der Rotorgrundkörper (101) in einer Radialrichtung (R) des Rotors(100) erstreckt und einen Verbindungsabschnitt (103) umfasst, welcher sich zur Verbindung mit zumindest einem weiteren Rotor (200, 300) in einer Axialrichtung (A) des Rotors (100) erstreckt und den Rotoraußenraum (RA) von einem Rotorinnenraum (RI) des Rotors (100) trennt,
wobei der Verbindungsabschnitt (103) in Axialrichtung (A) an einer Stirnseite (104), vorzugsweise in Axialrichtung (A) an einer stromabwärts liegenden Stirnseite (104), einen Wuchtflansch (105) umfasst,
wobei der Wuchtflansch (105) zur Kompensation einer Unwucht des Rotors (100) konfiguriert ist und sich zumindest abschnittsweise in Radialrichtung (R) in den Rotoraußenraum (RA) erstreckt.

2. Rotor (100) nach Anspruch 1,
wobei zwischen dem Wuchtflansch (105) und dem Rotorgrundkörper (101) eine Kavität (106) ausgebildet ist, wobei die Kavität (106) in einer Ansicht, vorzugsweise in einer Schnittansicht, zumindest abschnittsweise eine bogenförmige Kontur (107) oder eine kreisförmige Kontur (107) aufweist, und/oder
wobei die Kavität (106) in einer Umfangrichtung (U) des Rotors (100) rinnenförmig oder rillenförmig ausgebildet ist, und/oder
wobei die Kavität (106) in Radialrichtung (R) hinterschneidungsfrei ausgebildet ist.

3. Rotor (100) nach Anspruch 1 oder 2,
wobei der Wuchtflansch (105) einen Bearbeitungsabschnitt (108) umfasst, welcher sich in einer Umfangsrichtung (U) des Rotors (100) erstreckt und zur Materialentnahme, vorzugsweise zur spanenden Materialabtragung, ausgebildet ist,
wobei vorzugsweise der Bearbeitungsabschnitt (108) ringförmig ausgebildet, und/oder auf den Wuchtflansch (105) aufgepresst oder geschweißt, oder mit dem Wuchtflansch (105) integral einstückig hergestellt ist.

4. Rotor (100) nach einem der vorhergehenden Ansprüche,
wobei der Verbindungsabschnitt (103) einen Kontaktflansch (109) aufweist, welcher zur Kontaktierung eines weiteren Rotors (300) ausgebildet ist, um den Rotor (100) mit dem weiteren Rotor (300) formschlüssig und/oder kraftschlüssig zu verbinden,
wobei der Wuchtflansch (105) zu dem Kontaktflansch (109) beabstandet angeordnet und/oder ausgebildet ist, vorzugsweise in Radialrichtung (R) beabstandet angeordnet und/oder ausgebildet ist, und/oder
wobei der Wuchtflansch (105) zu dem Kontaktflansch (109), vorzugsweise zu einer Stirnfläche des Kontaktflanschs (109), in der Axialrichtung (A) zumindest abschnittsweise versetzt angeordnet und/oder ausgebildet ist.

5. Rotor(100) nach Anspruch 4,
wobei an der Stirnseite (104) der Wuchtflansch (105) und der Kontaktflansch (109) über einen Absatz (110) miteinander verbunden sind oder einander übergehen, wobei der Absatz (110) in einer Ansicht, vorzugsweise in einer Schnittansicht, zumindest abschnittsweise eine bogenförmige Kontur (111) aufweist.

6. Rotor (100) nach Anspruch 4 oder 5,
wobei in Radialrichtung (R) der Kontaktflansch (109) zu dem Wuchtflansch (105) zumindest abschnittsweise gegenüberliegend angeordnet ist.

7. Rotor (100) nach einem der vorhergehenden Ansprüche,
wobei der Rotorgrundkörper (101) einen ersten scheibenförmigen Tragabschnitt (112) und einen zweiten scheibenförmigen Tragabschnitt (113) aufweist, wobei der Verbindungsabschnitt (103) in Radialrichtung (R) zwischen dem ersten Tragabschnitt (112) und dem zweiten Tragabschnitt (113) angeordnet ist.

8. Rotor (100) nach einem der vorhergehenden Ansprüche,
wobei der Wuchtflansch (105) in Axialrichtung (A) eine zylinderförmige Stirnfläche (117) aufweist und in Axialrichtung (A) eine ebene Stirnfläche (118) aufweist, wobei die zylinderförmige Stirnfläche (117) zur ebenen Stirnfläche (118) senkrecht angeordnet und/oder ausgerichtet ist.

9. Rotor (100) nach einem der vorhergehenden Ansprüche,
wobei der Verbindungsabschnitt (103) einen Markierungsflansch (114) umfasst, welcher in Axialrichtung (A) auf der dem Wuchtflansch (105) gegenüberliegenden Stirnseite (115) des Rotors (100) angeordnet ist, wobei der Markierungsflansch (114) in einer Ansicht, vorzugsweise in einer Schnittansicht, zumindest abschnittsweise eine trapezförmige Kontur (116) aufweist.

10. Rotor (100) nach einem der vorhergehenden Ansprüche,
wobei der Wuchtflansch (105) und zumindest der Verbindungabschnitt (103) zumindest abschnittsweise integral einstückig hergestellt sind, vorzugsweise durch zumindest einen Gießvorgang und/oder durch zumindest einen Spritzvorgang und/oder durch zumindest einen Schweißvorgang.

11. Rotoranordnung mit einer Welle und zumindest einem Rotor (100) gemäß einem der vorliegenden Ansprüche, wobei der zumindest eine Rotor (100) auf der Welle lösbar befestigt ist und wobei in Axialrichtung (A) zumindest zwei weitere Rotoren (200, 300) mit dem zumindest einen Rotor (100) über den Verbindungsabschnitt (103) formschlüssig und/oder kraftschlüssig verbunden sind.

12. Rotoranordnung nach Anspruch 11, wobei die beiden Passsitze des Rotors (100) mit den benachbarten Rotoren (200) und (300) derart ausgebildet sind, dass die benachbarten Rotoren (200) und (300) beide den Verbindungsabschnitt (103) des Rotors (100) im Bereich des jeweiligen Passsitzes in Radialrichtung untergreifen

13. Strömungsmaschine mit zumindest einem Rotor (100) gemäß einem der vorhergehenden Ansprüche 1 bis 10 oder mit einer Rotoranordnung gemäß Anspruch 11 oder 12, wobei die Strömungsmaschine als Fluggasturbine oder als Verdichter ausgebildet ist.
